# EUROPEAN PATENT SPECIFICATION

(11) **EP 4 675 144 B1**
(45) Date of publication and mention of the grant of the patent: **13.05.2026**
(21) Application number: 24186682.1
(22) Date of filing: 04.07.2024
(51) Int. Cl.: F16L 25/01, F16L 33/00

(54) **CONNECTION DEVICE FOR HOSES, CONDUIT AND METHOD OF PRODUCING A CONDUIT**
ANSCHLUSSVORRICHTUNG FÜR SCHLÄUCHE, ROHRLEITUNG UND VERFAHREN ZUR HERSTELLUNG EINER ROHRLEITUNG
DISPOSITIF DE RACCORDEMENT POUR TUYAUX, CONDUIT ET MÉTHODE DE FABRICATION D'UN CONDUIT

(43) Date of publication of application: 07.01.2026
(73) Proprietor: Danfoss A/S, 6430 Nordborg (DK)
(72) Inventor: AKTEMUR, Veysel, 59500 Kapakli, Tekirdag (TR); CAN, Recep, 59500 Kapakli, Tekirdag (TR); APTIOGULLARI, Erhan, 59600 Saray, Tekirdag (TR); MUCO, Recep, 59520 Kapakli, Tekirdag (TR); DEVECI, Ferruh, 34520 Istanbul (TR)
(74) Representative: Nestler, Jan Hendrik

(56) References cited:
- DE-A1- 19 622 099
- DE-U1- 202009 009 745
- US-A1- 2004 087 986
- US-A1- 2020 072 395
- US-A1- 2020 166 166

## Description

The invention relates to a connection device for conduit comprising an attachment section for attachment of the connection device to another device. The invention further relates to a conduit, comprising at least one connection device at at least one of its ends. The invention further relates to a method of producing a conduit comprising a connection device.

Conduits are used in a wide variety of technical fields to transport material from one place to another. Material can be particularly gaseous material and/or liquidous material. Generally, one can talk about fluids (including fluids were a distinction between the gaseous and liquidous phase cannot be made anymore). Furthermore, it is of course possible that the gas/liquid/fluid may contain solid material to a certain extent (suspension, smoke and the like). However, it is even possible that only solid material is to be transported, where solid material may be transported by gravity, or where solid material may be conveyed in a stream of gas and/or liquid (where the corresponding transport of the gas/liquid is only some sort of a side effect). Regularly, for such conduits, hoses and tubes are used, where the notion of a hose is usually used when the conduit is elastic and/or a bendable, while the notion of a tube (or even pipe) is usually used in case the tube/pipe is not elastic (it is of course acknowledged that essentially all materials are elastic to a certain, minimum extent).

Of course, the length of conduits is always limited. Furthermore, at a certain point the conduit has to be connected to a machinery, a tank, a feeding hopper, a storage means or the like. For effectuating such a connection, various designs of connection devices are around. Just to name some examples: flange devices, plugs, sockets or the like are known in the prior art.

A certain technical challenge for such connection devices for conduits is the mechanical attachment of the connection device and the conduit to each other. It is clearly understandable that the connection has to sustain sufficiently high mechanical forces and should not fail due to vibration, temperature changes, pressure changes and the like during the use of the arrangement. Further, the cost aspect should always be considered.

Another problem arises, when it comes to perishable products or the like. Here, the connection end section poses particular problems, since the changeover from the nipple part of the connection device to the inner surface of the "standard" conduit poses a problem. In particular, small gaps can occur in the transition region between the materials. In such small gaps, however, bacteria or the like can remain, which may pose a health hazard. Similar problems occur when it comes to poisonous or otherwise hazardous and dangerous products, since even a small leftover in the inside of the house can pose a risk.

Yet further, in the context of perishable goods or hazardous products, so far, the material of the nipple has to be chosen in a way to be compatible with the respective product. Therefore, frequently comparatively expensive materials have to be chosen, resulting in an accordingly high cost for the connection device.

DE 196 22 099 A1 discloses a quick-release coupling with a coolant hose for the first line part and a receiving connection for a second line part. These components have positively engaging closing sectors and sealing sectors. There is a shape stabilising element in the form of an annular stabilising crown. The crown is connected at least partly co-axially to the hose end in its outer jacket. There are at least two locking elements projecting radially outwards, with corresponding locking seats in the connectors, forming the closing sectors.

US 2020/166166 A1 suggests a hose that has a body and a mouthpiece connected with the body. The mouthpiece is slidably placed against the body. It is designed for mounting of the end of the hose and it has a thickening. The ending has a circumferential stop placed in the axis of the mouthpiece, whereby the stop has on its circumference a touch surface which is oriented inside, against the thickening on the mouthpiece. The mouthpiece can be sealed by sealing ring against the body, whereby the ring is placed in the sealing zone, or the mouthpiece can be connected with the body by a flexible bellow. During the movement of the mouthpiece outside the touch surface of the stop and the outer surface of the hose in the zone with the thickening draw closer and the hose is held on the mouthpiece by the underpressure between the surface of the stop and the thickening. The increasing pressure in the hose increases the underpressure of the hose on the mouthpiece which increases the sealing effect of the joint.

DE 20 2009 009745 U1 relates to a hose connector comprising a hose and a fitting with a tubular end. The end region of the hose is slipped onto the tubular end of the fitting. In order to achieve the situation in which, when the end region of the hose is heated, the unintended detachment of the hose from the associated fitting is avoided as reliably as possible, the invention proposes to connect the end region of the hose and the tubular end of the fitting to each other via a form-fitting connection and, if necessary, to additionally secure the parts by means of a clamped connection.

US 2020/072395 A1 proposes a four-layer-structured water passing device, in which a first sleeve and a second sleeve are disposed between an elastic inner tube and an outer cloth sheath. When the water passing device is connected with a pressurized water source, the first sleeve can quickly eliminate or reduce the impact wave strength when receiving a strong expansion impact from the elastic inner tube, such that the first sleeve can gently transmit the fluctuation to the second sleeve, and the second sleeve extends the outer cloth sheath to the limit length, so as to avoid damage caused by frequent direct contact friction between the elastic inner tube and the outer cloth sheath. The water passing device is also configured to avoid permanent deformation and abrasion at the joint position between the elastic inner tube and the outer cloth sheath, and thus prolong the service life of the water passing device.

US 2004/087986 A1 relates to a device for connecting a cannula made of a flexible material with a tube. The device for connecting cannulae made of flexible materials with tubes, provides uncomplicated, quick, safe and reproducible conditions for connecting and disconnecting. This is done by a device for connecting a cannula made of a flexible material with a tube, wherein a nipple formed on the tube is inserted into the cannula. A rotatable claw ring, which is arranged on a cannula end for displacement to a stop, can be rotatably joined with a locking ring which is secured to a tube end by axial movement and latching engagement with the locking ring. The connection can be released by rotating the claw ring and pulling the claw ring and the cannula apart in an axial direction.

It is easily understandable that there is a desire in the technical field to reduce such problems and/or the cost associated with the afore mentioned problems.

It is therefore an object of the present invention to propose a connection device for a conduit that comprises an attachment section for attachment of the connection device to another device, and a nipple section with a circumferentially shaped sheet material for attachment of the sheath of the conduit that is improved over connection devices of this type that are known in the state of the art.

It is another object of the present invention, to propose a conduit comprising at least one connection device at at least one of its ends that is improved over conduits of this type that are known in the state of the art.

It is yet another object of the present invention to propose a method for producing a conduit comprising a connection device that is improved over methods of this type that are known in the prior art.

A conduit according to claim 1 and a method according to claim 13 solve these objects, respectively.

A conduit comprising at least one connection device at at least one of its ends is proposed. It is suggested to design the connection device in a way that the connection device comprises an attachment section for attachment of the connection device to another device, and a nipple section with a circumferentially shaped sheet material for attachment to the sheath of the conduit, in a way that the sheet material of the nipple section comprises at least one, preferably a plurality of cut-outs. At least part of the sheath extends on the radial inner side of the nipple section of the connection device towards an opening of the attachment section of the connecting device, and a part of the sheath of the conduit is arranged on the radial outside of the nipple section. The attachment section may be designed in any way that is technically feasible. It may be designed in a way that an attachment to another device using screws, rivets or like is used. Also, the attachment section might comprise a thread, a bayonet type attachment means (comprising some reach behind means or the like), a clamping means, or the like that can work together with a corresponding device in a way that no additional fixation means (additional screws, rivets or the like) are necessary for effectuating the attachment. Even further, the attachment section may be designed as some kind of a quick connection and disconnection device, so that a fast connection and/or disconnection of the connection device (and thus of the tube or hose end) to another, corresponding device, can be effectuated, in particular easily and quickly effectuated. Further, the attachment means may even act as some kind of a shoulder that is simply clamped by a different device (for example by a ring comprising bores for screws that may be screwed into receiving bores that are provided in some kind of a machinery, to which the connecting device is to be connected). The nipple section comprises a circumferentially shaped sheet material for attachment to the sheath of the conduit. It is to be noted that the sheet material can be comparatively thin (like up to 0.5 mm, 1 mm, 1.5 mm or 2 mm. However, the sheet material can be even thicker, comprising a substantive thickness that might normally not be referred to as a sheet material. Nevertheless, such a comparatively thick material (block-like material or the like) may nevertheless be considered to be a sheet material in the context of the present disclosure. By the notion circumferential it is to be noted that this is usually to be interpreted as a complete encircling/encasement of a void within the clearance profile of the circumferentially shaped sheet material/nipple section. Of course, "encasing" is typically interpreted with respect to a radial direction. On the other hand, in the axial direction the void is usually open, which is due to the very basic functionality of a conduit / a connecting device for a conduit. Typically, the nipple section has a somewhat elongated design, so that its length (usually equivalent to an axial direction) is somewhat larger as compared to a direction that is normal to the lengthwise extent (radial/tangential direction). The length might particularly be defined as the main/overall direction through which fluid/material will pass, when the connection device is used in its intended way (overall conveying direction of material). Therefore, the length can also be in the order of the size of the radial/tangential extent. Even further, it might be even shorter as compared to the tangential/radial direction. Nevertheless, typically a somewhat larger length is preferred due to mechanical stability issues (the mechanical fixation between the connection device/nipple section and the conduit/sheath of the conduit can become more resilient/may sustain higher forces. Typically, the circumference/the cross-section of the nipple section is somewhat circular in shape. This includes also ellipsoidal, oval shapes and the like. However, different shapes, like n-edged shapes (regularly shaped or non-regularly shaped), in particular like triangles, rectangles, squares, pentagons, hexagons, heptagons, octagons or the like may be employed as well (included in n-edged shapes with somewhat rounded corners). The same may apply mutatis mutandis to the attachment section of the connection device and/or for the conduit that is to be connected to the connection device. Presently, it is proposed that the nipple section comprises at least one, preferably a plurality of cut-outs. This way, it is not only possible to reduce the amount of material that is required for the connection device (typically a somewhat hard material is used, that has a correspondingly high density; therefore, the weight of the arrangement can be reduced). However, a surprisingly large advantage of the presently proposed design lies in that it is surprisingly easily possible to split up the sheath of the conduit into two parts, wherein one part of the sheath lies circumferentially inside the nipple section, while the other part of the sheet lies circumferentially outside of the nipple section. Thanks to the cutouts in the nipple section, the parts of the sheath can be bonded together by penetrating through the cutouts, and joining each other (for example by melding together). This way, it is possible to increase the bonding forces between the parts of the sheath material and/or the (inner and/or outer) part of the sheath material and the neighbouring respective surface part of the sheet material of the nipple section. Therefore, it is possible to extend the material of the sheath of the conduit into the inner circumference of the nipple section, thus covering the inner surface of the nipple section (or at least parts thereof). Nevertheless, there is typically no significant or realistic risk of delamination of particularly the inner part of the sheath of the conduit from the neighbouring sheet material of the nipple section. This way it is surprisingly easily possible to use cheaper and/or less problematic and/or easier to manufacture and/or more durable material for the nipple section/connection device, since the material that is transported through the conduit does not come into contact with the material of the connection device/nipple section of the connection device (and thus the material properties of the nipple section of the connecting device may be chosen irrespective from the material that is to be transported in the conduit). Further, any slits, gaps or the like in the inner surface of the conduit can be advantageously avoided, including the section where the connection device is placed. This is because no changeover between the conduit material and the material of the nipple device is accessible/present on the inside surface of the conduit.

To take the example of a conduit for perishable food: according to present regulations, with connection devices according to the state-of-the-art, special stainless steel alloys have to be used. Using the present suggestion, standard steel can be used for the connection device, even including the nipple section of the connecting device. Even further, since no rims/slits are present anymore, no bacteria can hide in such slits any more, increasing the food safety significantly. Yet further, cleaning processes may be simplified, which is also big advantage.

Further, it is suggested to design the connection device in a way that at least one of the cut-outs extends towards the limiting rim of the nipple section that faces the conduit. Additionally or alternatively, the connection device can be designed in a way that at least one of the cut-outs is designed and arranged in a way that is not fully enclosed by the sheet material of the nipple section. This way, the connection device, in particular its nipple section, can be produced easier. Furthermore, first experiments indicate that this design even increases the stability of the whole arrangement. In particular, the design does decrease the probability of a delamination of the inner part of the sheath of the conduit from the neighbouring surface of the sheet material (in regions where no cutout is present) even further.

Furthermore, is suggested to design the connection device in a way that at least one of the cut-outs is U-shaped. This design combines an easy manufacturability, with additional benefits like low weight, high strength of the connection between the sheath material and the nipple section, and a very low risk of delamination of the inner part of the sheath from the corresponding surface of the sheet material of the nipple section.

Yet further, it is suggested to design the connection device in a way that the nipple section comprises at least one, preferably a plurality of protruding web sections that protrude in the direction of the conduit. Using this design, again the manufacturability of the connection device can be increased and/or the stability of the whole arrangement can be increased. In particular, the above suggestions of not fully enclosed cut-outs and/or U-shaped cut-outs can be realised in a particularly advantageous way.

Even further it is suggested to design the connection device in a way that the nipple section comprises at least one radially protruding fixation means. This can be realised as some kind of protruding webs, a plurality of protruding pins, or the like. In particular, such radially protruding fixation means may be arranged along a circumferential / tangential direction. Such protruding fixation means may effectively lower the possibility of pulling the conduit / the sheath of the conduit off the nipple section. Therefore, the stability and lifetime of the whole arrangement may be increased.

Yet further it is suggested to design the connection device in a way that it is, at least in part, essentially rotational symmetric and/or that it comprises, at least in parts, an n-count symmetry around its lengthwise extent. This way, the connection device can be easily manufactured, may be compatible with standard conduits and/or may endure particularly high pressures, in particular on the inside of the conduit.

Even further, it is suggested to design the connection device in a way that the attachment section is designed and arranged as a flange device, a conduit plug device, a conduit socket device, a male connector device and/or a female connector device. Additionally or alternatively, the connection device may be designed and arranged in a way that it is designed for a conduit that is preferably used for liquidous and/or gasous substances. This way, the connection device can be easily used for various intended purposes that are frequently asked for in the relevant fields of technology. Furthermore, the connection device may be easily designed as a snap-fit design, replacing connection devices as they are known in the state-of-the-art.

Even further, it is suggested to design the connection device in a way that the material of the connection device comprises electrically conductive material, preferably metallic material. This way, the connection device can be used in electrostatic-prone environments. It is to be noted that it is certainly possible to use plastic material or resin that is treated in a way that it may transfer electric energy. However, it should be noted that in principle the connection device may contain and/or may be produced of any other type of material, including (non-electrically conductive) plastics material, resin material or the like.

Furthermore, a conduit is suggested that comprises at least one connection device at at least one of its ends, wherein the connection device is designed and arranged according to the present disclosure. The conduit is designed and arranged in a way that at least part of the sheath extends on the radial inner side of the nipple section of the connection device towards the opening of the connection side of the connecting device, and a part of the sheath of the conduit is arranged on the radial outside of the nipple section. In particular, the inner part of the sheath may extend right up to, or even past / beyond the opening at the connecting side (attachment to other devices) of the connecting device. Using such a conduit, the same advantages and features of the connection device, as discussed, can be realised, at least in analogy. "Beyond the opening of the connection side" may be interpreted in a way that the sleeve continues on the end surface, flange part or the like of the attachment section of the connecting device. In other words, the inner part of the sheath of the conduit may then become an interfacing material. Then it may work as a sealing or the like.

In particular, the conduit may be designed and arranged in a way that it is an elastic conduit, preferably a hose. Additionally or alternatively, it may be designed and arranged in a way that the sheath of the conduit comprises a rubber material, preferably a fibre reinforced rubber material. Using such a design and/or such a material, certain requirements that are around in certain technical fields can be advantageously dealt with. Even further, this way the conduits may be used as a snap-fit design for some designs that are already employed in the field.

Yet further it is suggested to a design and arrange the conduit in a way that it comprises an electrically conductive material, in particular an embedded electrically conductive material, more preferably a metallic material. This way, the conduit can be used in electrostatic-prone environments as well. It is to be noted that material that passes through a conduit (for example liquid and/or solid material that slides past a rubber surface) may result in the creation of electrostatic charges. Using the present proposal, such electrostatic charges can be easily grounded. Therefore, the risk of sparking (which may in turn cause fires or explosions) may be advantageously avoided.

As previously mentioned, it is suggested to design and arrange the conduit in a way that a part of the sheath of the conduit is arranged on the radial outside of the nipple section. In other words, the two parts of the sheaths will then enclose the sheet material of the nipple section in between. This way a particularly good fixation of the conduit and the connector part may be realised. Again, attention is directed to the fact that the (two) parts of the sheath material may be bonded together through the cut-outs of the sheet of the nipple section, so that the stability of the arrangement may be increased.

Further, a method of producing a conduit comprising a connection device is suggested, in which a first, inner part of the sheath of the conduit is produced; then, a connection device, in particular a nipple section of the connection device, is placed over at least one end section of the conduit on the radial outside of the first part of the sheath; and afterwards a second part of the sheath of the conduit is placed on the radial outside of at least part of the connection device, preferably at least a part of the nipple section of the connection device, and/or the first part of the sheath. The conduit is a conduit according to the present disclosure. Using this method, a particularly advantageous conduit comprising a connection device may be produced in a simple and effective way. The result of such an arrangement may show the same features and advantages as already discussed, at least in analogy.

In particular, the method may be employed in a way that the conduit is at least partially produced on a mandrel, preferably on a rotating mandrel. This way, the production method may be realised particularly effective and cost efficient.

Further advantages, features, and objects of the invention will be apparent from the following detailed description of the invention in connection with the associated drawings, wherein the drawings show:
- Fig. 1:: a possible embodiment of a connection device in a schematic, perspective view;
- Fig. 2:: the embodiment of a connection device according to Fig. 1 in a schematic cross-section;
- Fig. 3:: a possible embodiment of a connection arrangement, comprising a conduit and a connection device in a schematic perspective and cross-sectional view;
- Fig. 4:: the embodiment of the connection arrangement according to Fig. 3 in a schematic, perspective cross-section in a partially cut open view;
- Fig. 5:: a second possible embodiment of a connection arrangement in a schematic perspective, cross-sectionalal, partially cut open view.

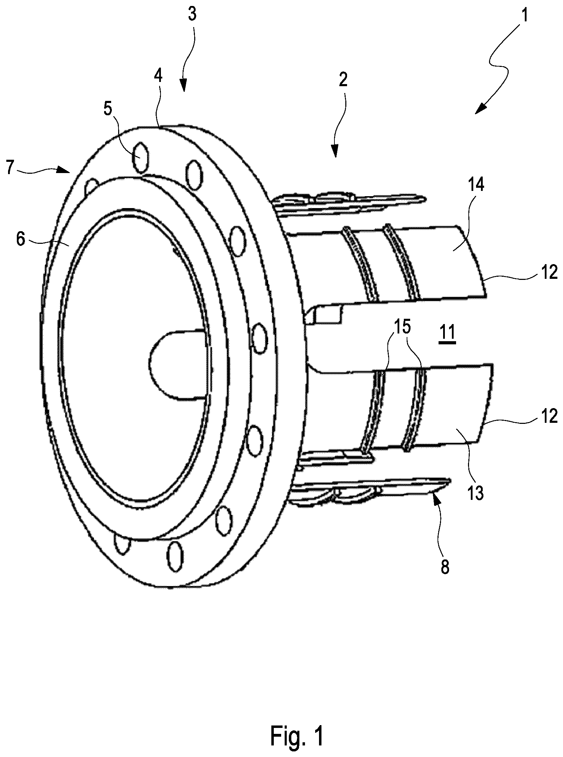

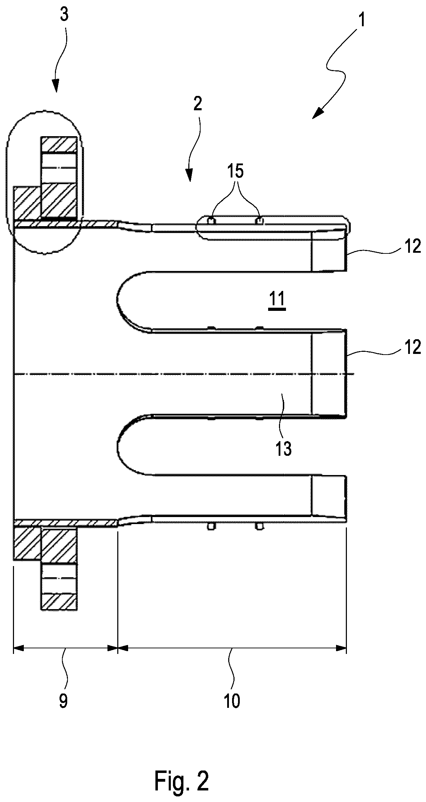

Fig. 1 shows a first possible embodiment of a connection device 1 according to the present disclosure in schematic, perspective view. For further clarification, Fig. 2 shows the same connection device 1 in a schematic cross-sectional view.

The connection device 1 comprises a nipple section 2 and an attachment section 3. Presently, the attachment section 3 and the nipple section 2 are parts of s single, one-piece connection device 1.

The attachment section 3 presently comprises a flange part 4 that comprises a plurality of bores 5 that can be used for attachment of the attachment section 3 to a machinery (or the like; presently not shown) by means of a plurality of screws. Such flange parts 4 are as such a well-known and widely employed attachment means, not only, but also for tubes and hoses 17.

Furthermore, a ring-like protrusion 6 protrudes somewhat from the forward directed side 7 of the flange part 4 of attachment section 3. This protrusion is not necessarily required, but is known to be advantageous for avoiding any gaps in the fluid connection, as will become more clear in the following. This is particularly true if the inner part 21 of the sheath 19 of the hose 17 is continued on at least a part of the front surface side 7 of connection device 1.

Further, the connection device 1 comprises (on the opposite side of the attachment section 3) a nipple section 2. Presently, the nipple section 2 comprises an essentially cylindrically shaped sheet 8 (see also Fig. 2). The cylindrical sheet 8 comprises an only comparatively short uninterrupted surface section 9 and a (presently longer) interrupted surface section 10. While the cylindrical sheet 8 forms a full cylinder in the uninterrupted surface section 9, the single sheet 8 comprises a plurality of U-shaped cut-outs 11 in the interrupted surface section 10. The cut-outs 11 are presently designed in a way that they are open to the limiting rim 12 of the nipple section 2 (distant from the attachment section 3; i.e. pointing towards the hose 17 that is to be attached to the connection device 1).

One could also describe things differently, namely in that the nipple section 2 comprises an uninterrupted surface section 9, from which a plurality of protruding webs 13 are protruding in the direction of the hose 17 (to be connected to the connection device 1).

Further, one can see on the radial outside surface 14 of the nipple section 2 (presently of the axially protruding webs 13) a plurality (presently two) radially protruding webs 15. These radially protruding webs 15 lead to some kind of a positive form locking connection to the (deformed) hose 17, so that the hose 17 (that is to be connected to the connection device 1) cannot be easily pulled off from the nipple section 2 of the connection device 1.

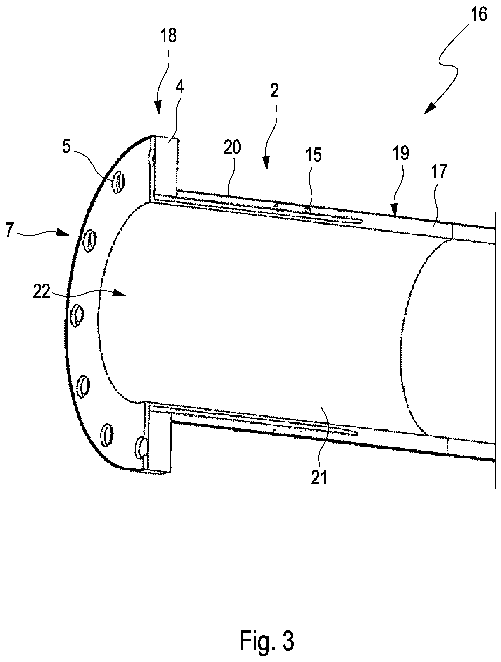

Fig. 3 shows a slightly different connection device 16 in a schematic, perspective and cross-sectional view, in which a hose 17 is connected to the connection device 16. Different from the connection device 1, as shown in Fig. 1, the present connection device 16 does not show a protruding ringlike protrusion 6. Therefore, the attachment section 18 is shaped as a so-to-say flat face flange. Nevertheless, as usual with a flange, a plurality of bores 5 is provided in the flange part 4 of the connection device 16.

**In** this context it is to be noted that in the present disclosure identical reference numerals are used for better understandability, if the respective parts are sufficiently similar in design and/or function, so that according to a person skilled in the art, the use of identical reference signs seems to be justified.

Presently, the nipple section 2 of the connection device 16 is embedded into the sheath 19 of the hose 17. Therefore, in the vicinity of the nipple section 2, the sheath 19 of the hose 17 shows an outer part 20 of the sheath 19, and an inner part 21 of the sheath 19. It is to be noted that the inner part 21 of sheath 19 extends beyond the tube opening 22 at the forward side 7 of flange part 4. This, however, is not mandatory. However, first experiments show that this design will decrease delamination effects of the inner part 21 of sheath 19 from the neighbouring surface of the sheet material 8 of the nipple section 2. In particular, the inner part 21 of the sheath 19 that lies on (covering) the forward side 7 of flange part 4 comprises bores 5 similar to the flange part 4 itself, so that the screws that are used for attachment purposes of the flange part 4 will hold the inner part 21 of sheath 19 in place.

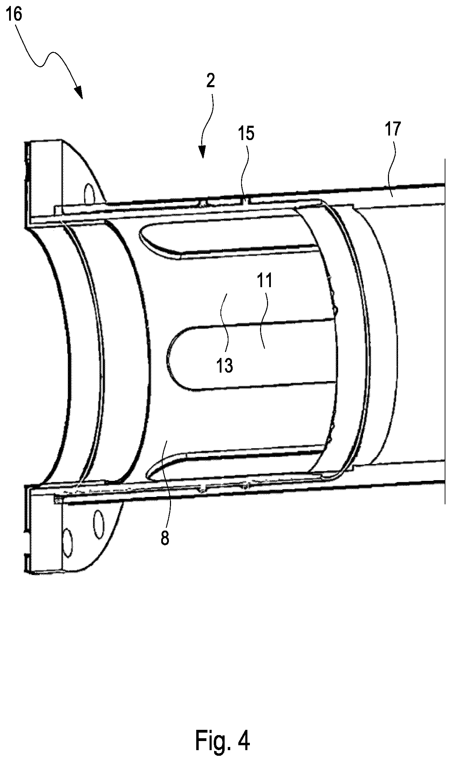

It is further to be noted that the inner part 21 of sheath 19 is not only held in place due to the fixation bores 5 and - when the connection device 16 is attached to machinery - due to the clamping force between the flange part 4 and the corresponding surface of the machinery, but also because the cylindrical sheet 8 shows a plurality of protruding webs 13 with interspaced cut-outs 11. This becomes more clear when looking at Fig. 4, which shows essentially the view of Fig. 3. However, in the nipple section 2 of connection device 16, the inner part 21 of sheath 19 is omitted for clarity.

Therefore, in the region of the cut-outs 11, the inner part 21 and the outer part 20 of sheath 19 will not only come into contact, but will (at least according to the present embodiment) adhere to each other, which in turn results in a significantly reduced risk of delamination of one (or both) of the parts 20, 21 of sheath 19 from the respective surface part of cylindrical sheet 8.

Thanks to the axially protruding webs 13 and the radially protruding webs 15 (which results in an essentially positive form fit connection between nipple section 2 and sheath 19 of the hose 17, the mechanical connection between connection device 16 and hose 17 can sustain very high pulling forces.

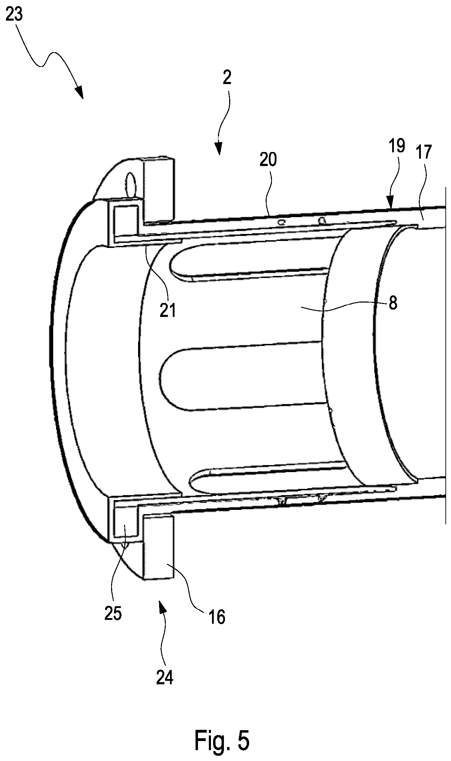

In Fig. 5 another modification of a connection device 23 is shown in a connected state with a hose 17 in a schematically cross-sectional perspective view, where the inner sheath 19 of hose 17 in part of the nipple section 2 is omitted for understandability (similar to the view of Fig. 4).

Presently the attachment section 24 of connecting device 23 is (again) designed somewhat differently. Presently, the attachment section 24 comprises two separate parts of the connecting device 23, namely a ring-like protrusion 25 (somewhat similar to the ring-like protrusion 6 of Fig. 1) and a presently separately provided flange ring 26 with a plurality of bores 5 for receiving a plurality of screws for attachment purposes.

Thanks to the present design, it is possible that the inner part 21 and the outer part 20 of sheath 19 can be continued over the front surface of ring-like flange ring 25 back to the respective other parts 20, 21 of sheath 19. Therefore, the combined part of nipple section 2 and ring-like protrusion 24 is fully encapsulated by the material of the sheath 19. This may prove to be advantageous for stability reasons, and further for avoiding any gaps in which bacteria could nest (or the like). A mechanical fixation is realised by a force that is acting by means of the flange ring 26 onto the ring-like protrusion 25.

It is to be noted that a single one or a plurality of the features of one, several or all of the presently disclosed detailed embodiments may be used in combination with the generic description of the present disclosure.

## Claims

1. Conduit (17), comprising at least one connection device (1) at at least one of its ends, the connection device (1) comprising an attachment section (3) for attachment of the connection device (1) to another device, and a nipple section (2) with a circumferentially shaped sheet material (8) for attachment to the sheath (19) of the conduit (17), wherein the sheet material (8) of the nipple section (2) comprises at least one, preferably a plurality of cut-outs (11), wherein at least part (21) of the sheath (19) extends on the radial inner side of the nipple section (2) of the connection device (1) towards an opening (22) of the attachment section (3) of the connecting device (1), and wherein a part (20) of the sheath (19) of the conduit (17) is arranged on the radial outside (14) of the nipple section (8).

2. Conduit (17) according to claim 1, **characterised in that** the parts (20, 21) of the sheath (19) are bonded together by penetrating through the cut-outs (11) in the nipple section (2) of the connection device (1), and joining each other (20, 21).

3. Conduit (17) according to claim 1 or 2, **characterised in that** at least one of the cut-outs (11) extends towards the limiting rim (12) of the nipple section (2) that faces the conduit (17) and/or **characterised in that** at least one of the cut-outs (11) is designed and arranged in a way that it is not fully enclosed by the sheet material (8) of the nipple section (2).

4. Conduit (17) according to any of the preceding claims, in particular according to claim 3, **characterised in that** at least one of the cut-outs (11) is U-shaped.

5. Conduit (17) according to any of the preceding claims, in particular according to claim 3 or 4, **characterised in that** the nipple section (2) comprises at least one, preferably a plurality of protruding web sections (13) that protrude in the direction of the conduit (17).

6. Conduit (17) according to any of the preceding claims, **characterized in that** the nipple section (2) comprises at least one radially protruding fixation means (15).

7. Conduit (17) according to any of the preceding claims, preferably according to claim 5 or 6, **characterised in that** it is, at least in parts, essentially rotationally symmetric and/or that it comprises, at least in parts, an n-count symmetry around its lengthwise extent.

8. Conduit (17) according to any of the preceding claims, **characterised in that** the attachment section (3) is designed and arranged as a flange device (4), a conduit plug device, a conduit socket device, a male connector device and/or a female connector device and/or **characterized in that** it is designed for a conduit, preferably for liquidous and/or gaseous substances.

9. Conduit (17) according to any of the preceding claims, **characterized in that** the material of the connection device (1) comprises electrically conductive material, preferably metallic material.

10. Conduit (17) according to any of the preceding claims, **characterized in that** at least part (21) of the sheath (19) extends on the radial inner side of the nipple section (2) of the connection device (1) beyond the opening (22) at the connecting side of the connecting device (1).

11. Conduit (17) according to any of the preceding claims, **characterised in that** the conduit (17) is designed and arranged as an elastic conduit (17), preferably as a hose, and/or **characterized in that** the sheath (19) of the conduit (17) comprises a rubber material, preferably a fiber reinforced rubber material.

12. Conduit (17) according to any of the preceding claims, **characterized in that** the conduit (17) comprises an electrically conductive material, in particular an embedded electrically conductive material, more preferably a metallic material.

13. Method of producing a conduit (17) according to any of the preceding claims, **characterized in that**
a first, inner part (21) of the sheath (19) of the conduit (17) is produced, a nipple section (2) of the connection device (1) is placed over at least one end section of the conduit (17) on the radial outside of the first part (21) of the sheath (19), and
a second part (22) of the sheath (19) of the conduit (17) is placed on the radial outside of at least a part of the connection device (1), preferably at least a part of the nipple section (2) of the connection device (1), and/or the first part (21) of the sheath (19).

14. Method of producing a conduit (17) according to claim 13, **characterized in that** the conduit (17) is at least partially produced on a mandrel, preferably on a rotating mandrel.

## Patentansprüche

1. Leitung (17), die an zumindest einem ihrer Enden zumindest eine Verbindungsvorrichtung (1) aufweist, wobei die Verbindungsvorrichtung (1) einen Befestigungsabschnitt (3) zur Befestigung der Verbindungsvorrichtung (1) an einer anderen Vorrichtung und einen Nippelabschnitt (2) mit einem umlaufend geformten Flachmaterial (8) zur Befestigung am der Mantel (19) der Leitung (17) aufweist, wobei das Flachmaterial (8) des Nippelabschnitts (2) zumindest eine, vorzugsweise mehrere Aussparungen (11) aufweist, wobei sich zumindest ein Teil (21) des Mantels (19) auf der radialen Innenseite des Nippelabschnitts (2) der Verbindungsvorrichtung (1) in Richtung einer Öffnung (22) des Befestigungsabschnitts (3) der Verbindungsvorrichtung (1) erstreckt, und wobei ein Teil (20) des Mantels (19) der Leitung (17) an der radialen Außenseite (14) des Nippelabschnitts (8) angeordnet ist.

2. Leitung (17) nach Anspruch 1, **dadurch gekennzeichnet, dass** die Teile (20, 21) des Mantels (19) miteinander verbunden sind, indem sie durch die Aussparungen (11) im Nippelabschnitt (2) der Verbindungsvorrichtung (1) hindurchragen und miteinander verbunden sind (20, 21).

3. Leitung (17) nach Anspruch 1 oder 2, **dadurch gekennzeichnet, dass** sich zumindest eine der Aussparungen (11) in Richtung des Begrenzungsrandes (12) des Nippelabschnitts (2) erstreckt, der der Leitung (17) zugewandt ist, und/oder **dadurch gekennzeichnet, dass** zumindest eine der Aussparungen (11) so ausgebildet und eingerichtet ist, dass sie nicht vollständig von dem Flachmaterial (8) des Nippelabschnitts (2) umschlossen ist.

4. Leitung (17) nach einem der vorstehenden Ansprüche, insbesondere nach Anspruch 3, **dadurch gekennzeichnet, dass** zumindest eine der Aussparungen (11) U-förmig ist.

5. Leitung (17) nach einem der vorstehenden Ansprüche, insbesondere nach Anspruch 3 oder 4, **dadurch gekennzeichnet, dass** der Nippelabschnitt (2) zumindest einen, vorzugsweise mehrere vorstehende Stegabschnitte (13) aufweist, die in Richtung der Leitung (17) vorstehen.

6. Leitung (17) nach einem der vorstehenden Ansprüche, **dadurch gekennzeichnet, dass** der Nippelabschnitt (2) zumindest eine radial vorstehende Befestigungseinrichtung (15) aufweist.

7. Leitung (17) nach einem der vorstehenden Ansprüche, insbesondere nach Anspruch 5 oder 6, **dadurch gekennzeichnet, dass** sie zumindest teilweise im Wesentlichen rotationssymmetrisch ist und/oder dass sie zumindest teilweise eine n-fache Symmetrie um ihre Längserstreckung aufweist.

8. Leitung (17) nach einem der vorstehenden Ansprüche, **dadurch gekennzeichnet, dass** der Befestigungsabschnitt (3) als Flanschvorrichtung (4), Leitungssteckvorrichtung, Leitungsmuffenvorrichtung, Steckverbindervorrichtung und/oder Buchsenverbindervorrichtung ausgebildet und eingerichtet ist und/oder **dadurch gekennzeichnet, dass** er für eine Leitung, vorzugsweise für flüssige und/oder gasförmige Stoffe, ausgelegt ist.

9. Leitung (17) nach einem der vorstehenden Ansprüche, **dadurch gekennzeichnet, dass** das Material der Verbindungsvorrichtung (1) elektrisch leitfähiges Material, vorzugsweise metallisches Material, aufweist.

10. Leitung (17) nach einem der vorstehenden Ansprüche, **dadurch gekennzeichnet, dass** sich zumindest ein Teil (21) des Mantels (19) auf der radialen Innenseite des Nippelabschnitts (2) der Verbindungsvorrichtung (1) über die Öffnung (22) an der Verbindungsseite der Verbindungsvorrichtung (1) hinaus erstreckt.

11. Leitung (17) nach einem der vorstehenden Ansprüche, **dadurch gekennzeichnet, dass** die Leitung (17) als elastische Leitung (17), vorzugsweise als Schlauch, ausgebildet und eingerichtet ist, und/oder **dadurch gekennzeichnet, dass** der Mantel (19) der Leitung (17) ein Gummimaterial, vorzugsweise ein faserverstärktes Gummimaterial, aufweist.

12. Leitung (17) nach einem der vorstehenden Ansprüche, **dadurch gekennzeichnet, dass** die Leitung (17) ein elektrisch leitfähiges Material, insbesondere ein eingebettetes elektrisch leitfähiges Material, vorzugsweise ein metallisches Material, aufweist.

13. Verfahren zur Herstellung einer Leitung (17) nach einem der vorstehenden Ansprüche, **dadurch gekennzeichnet, dass**
ein erster, innerer Teil (21) des Mantels (19) der Leitung (17) hergestellt wird,
ein Nippelabschnitt (2) der Verbindungsvorrichtung (1) über zumindest einem Endabschnitt der Leitung (17) an der radialen Außenseite des ersten Teils (21) des Mantels (19) angeordnet wird und
ein zweiter Teil (22) des Mantels (19) der Leitung (17) auf der radialen Außenseite zumindest eines Teils der Verbindungsvorrichtung (1), vorzugsweise zumindest eines Teils des Nippelabschnitts (2) der Verbindungsvorrichtung (1), und/oder des ersten Teils (21) des Mantels (19) angeordnet wird.

14. Verfahren zur Herstellung einer Leitung (17) nach Anspruch 13, **dadurch gekennzeichnet, dass** die Leitung (17) zumindest teilweise auf einem Dorn, vorzugsweise auf einem rotierenden Dorn, hergestellt wird.

## Revendications

1. Conduit (17), comprenant au moins un dispositif de raccordement (1) au niveau d'au moins une de ses extrémités, le dispositif de raccordement (1) comprenant une section de fixation (3) pour la fixation du dispositif de raccordement (1) à un autre dispositif, et une section mamelon (2) avec un matériau en feuille (8) de forme circonférentielle pour fixation à la gaine (19) du conduit (17), dans lequel le matériau en feuille (8) de la section mamelon (2) comprend au moins une, de préférence une pluralité de découpes (11), dans lequel au moins une partie (21) de la gaine (19) s'étend sur le côté interne radial de la section mamelon (2) du dispositif de raccordement (1) vers une ouverture (22) de la section de fixation (3) du dispositif de raccordement (1), et dans lequel une partie (20) de la gaine (19) du conduit (17) est agencée sur l'extérieur radial (14) de la section mamelon (8).

2. Conduit (17) selon la revendication 1, **caractérisé en ce que** les parties (20, 21) de la gaine (19) sont liées ensemble en pénétrant à travers les découpes (11) dans la section mamelon (2) du dispositif de raccordement (1), et sont reliées les unes aux autres.

3. Conduit (17) selon la revendication 1 ou 2, **caractérisé en ce qu'**au moins une des découpes (11) s'étend vers le rebord de limitation (12) de la section mamelon (2) qui fait face au conduit (17) et/ou **caractérisé en ce qu'**au moins une des découpes (11) est conçue et agencée d'une manière telle qu'elle n'est pas entièrement enfermée par le matériau en feuille (8) de la section mamelon (2).

4. Conduit (17) selon l'une quelconque des revendications précédentes, en particulier selon la revendication 3, **caractérisé en ce qu'**au moins une des découpes (11) est en forme de U.

5. Conduit (17) selon l'une quelconque des revendications précédentes, en particulier selon la revendication 3 ou 4, **caractérisé en ce que** la section mamelon (2) comprend au moins une, de préférence une pluralité de sections bandes saillantes (13) qui font saillie dans la direction du conduit (17).

6. Conduit (17) selon l'une quelconque des revendications précédentes, **caractérisé en ce que** la section mamelon (2) comprend au moins un moyen de fixation (15) faisant radialement saillie.

7. Conduit (17) selon l'une quelconque des revendications précédentes, de préférence selon la revendication 5 ou 6, **caractérisé en ce qu'**il est, au moins dans des parties, essentiellement symétrique en rotation et/ou **en ce qu'**il comprend, au moins dans des parties, une symétrie de nombre n autour de son étendue longitudinale.

8. Conduit (17) selon l'une quelconque des revendications précédentes, **caractérisé en ce que** la section de fixation (3) est conçue et agencée en tant que dispositif bride (4), dispositif obturateur de conduit, dispositif de conduit, dispositif raccord mâle et/ou dispositif raccord femelle et/ou **caractérisé en ce qu'**il est conçu pour un conduit, de préférence pour substances liquides et/ou gazeuses.

9. Conduit (17) selon l'une quelconque des revendications précédentes, **caractérisé en ce que** le matériau du dispositif de raccordement (1) comprend un matériau électriquement conducteur, de préférence un matériau métallique.

10. Conduit (17) selon l'une quelconque des revendications précédentes, **caractérisé en ce que** l'au moins une partie (21) de la gaine (19) s'étend sur le côté interne radial de la section mamelon (2) du dispositif de raccordement (1) au-delà de l'ouverture (22) au niveau du côté raccordement du dispositif de raccordement (1).

11. Conduit (17) selon l'une quelconque des revendications précédentes, **caractérisé en ce que** le conduit (17) est conçu et agencé en tant que conduit élastique (17), de préférence en tant que tuyau, et/ou **caractérisé en ce que** la gaine (19) du conduit (17) comprend un matériau en caoutchouc, de préférence un matériau en caoutchouc renforcé de fibres.

12. Conduit (17) selon l'une quelconque des revendications précédentes, **caractérisé en ce que** le conduit (17) comprend un matériau électriquement conducteur, en particulier un matériau électriquement conducteur incorporé, plus préférablement un matériau métallique.

13. Procédé de production d'un conduit (17) selon l'une quelconque des revendications précédentes, **caractérisé en ce que**
une première partie interne (21) de la gaine (19) du conduit (17) est produite,
une section mamelon (2) du dispositif de raccordement (1) est placée pardessus au moins une section d'extrémité du conduit (17) sur l'extérieur radial de la première partie (21) de la gaine (19), et
une seconde partie (22) de la gaine (19) du conduit est placée sur l'extérieur radial d'au moins une partie du dispositif de raccordement (1), de préférence au moins une partie de la section mamelon (2) du dispositif de raccordement (1), et/ou la première partie (21) de la gaine (19).

14. Procédé de production d'un conduit (17) selon la revendication 13, **caractérisé en ce que** le conduit (17) est au moins partiellement produit sur un mandrin, de préférence sur un mandrin rotatif.
